## Europäisches Patentamt
## European Patent Office
## Office européen des brevets

(19)

(11) Veröffentlichungsnummer: **0 169 391**

**A1**

(12) # EUROPÄISCHE PATENTANMELDUNG

(21) Anmeldenummer: **85107840.2**

(22) Anmeldetag: **25.06.85**

(51) Int. Cl.⁴: **H 01 S 3/097**
**H 01 S 3/03**

(30) Priorität: **26.06.84 DE 3423525**

(43) Veröffentlichungstag der Anmeldung:
**29.01.86 Patentblatt 86/5**

(84) Benannte Vertragsstaaten:
**CH DE FR GB IT LI NL SE**

(71) Anmelder: **Siemens Aktiengesellschaft**
**Berlin und München Wittelsbacherplatz 2**
**D-8000 München 2(DE)**

(72) Erfinder: **Herzinger, Gerd**
**Fasanenweg 2**
**D-6101 Rossdorf(DE)**

(72) Erfinder: **Schülke, Helmut**
**Max-Reger-Strasse 4**
**D-6110 Dieburg(DE)**

(54) **Verfahren zum Betrieb eines Gaslasers und danach betriebener Gaslaser.**

(57) Verfahren zum Betrieb eines Gaslasers und danach betriebener Gaslaser.

Die Erfindung bezeiht sich auf einen Gaslaser mit einem Entladungskanal (16), der durch zwei voneinander distanzierte, auf einer dielektrischen Platte (15) angeordnete Elektroden definiert wird. Es wird vorgeschlagen, die Unterseite dieser Trägerplatte mit einer weiteren, den Entladungskanal überdeckenden Elektrode zu versehen und das Lasergas durch eine Oberflächenentladung längs der Plattenoberfläche zu stimulieren. Diese Entladung wird automatisch homogen, wenn man die Entladungsspannung hinreichend schnell ansteigen läßt und die Rückelektrode mit der Entladungskathode verbindet. Bevorzugte Ausführung: Das laseraktive Gas ist Stickstoff mit einem Druck von 200mbar; Der Hochspannungsimpuls wird von einem gefalteten, an einer Ladespannung von 10kV liegenden Bandleiter geliefert.

Einsatzmöglichkeiten: Kurzzeitphotographie, (Farbstoff-) Laserpumpen, Entfernungsmessung.

FIG 1

EP 0 169 391 A1

0169391

Siemens Aktiengesellschaft
Berlin und München

Unser Zeichen
VPA   84 P 8022 E

Verfahren zum Betrieb eines Gaslasers und danach betriebener Gaslaser.

Die Erfindung bezieht sich auf ein Betriebsverfahren gemäß dem Oberbegriff des Anspruchs 1. Eine solche Technik zur Erzeugung von Laserpulsen wird beispielsweise in Appl.Phys.Lett.$\underline{10}$ (1967)3 beschrieben.

Die zitierte Publikation geht von einem Lasertyp folgender Bauweise aus: Eine dielektrische Isolierplatte, vorzugsweise eine Kunststoffolie, befindet sich zwischen zwei Metallplatten. Die obere Metallplatte dieser Bandleitung ist durch einen Spalt, in dem sich ein laseraktives Gas (Stickstoff oder Neon) befindet, in zwei Teile getrennt. Beide Teile liegen auf einem positiven Potential von einigen 10 kV, während die untere Metallplatte geerdet ist. Im Betrieb des Lasers stellt man - mittels eines schnellen Hochleistungsschalters - zwischen dem einen Plattenteil und der unteren Platte einen Kurzschluß her. Es entsteht eine kurze, steil ansteigende Entladungsstromwelle, die durch den Bandleiter zum Spalt läuft und dort eine Gasentladung auslöst. Dieses Plasma stellt dann die erforderliche Besetzungsinversion her, wobei die Verstärkung so hoch ist, daß auch ohne optische Rückkopplung ein recht intensiver Laserimpuls zustandekommt.

Um die Ausgangsleistung dieses Superstrahlers noch weiter zu steigern, kann man versuchen, den Gasdruck p und die Entladungsspannung U zu erhöhen und zugleich die Stromanstiegszeit $\tau$ zu verkürzen. Der Spielraum ist hier allerdings relativ klein, und zwar vor allem deshalb, weil das Plasma mit wachsendem p und/oder U inhomogen wird und in wenig effektive Bogenentladungen übergeht.

Les 1 Lk/25.5.1984

0169391

Es gibt Möglichkeiten, das Auftreten solcher Plasmainstabilitäten zu erschweren. So hat man daran gedacht, die
Entladungselektroden längs des Spaltes zu mäandrieren
(DE-OS 24 30 241), die Kathodenoberfläche mit einer Vielzahl von scharfen Schneiden zu versehen und/oder das Gas
vorzuionisieren (Rev.Sci.Instrum.55 (1984) 166). Alle
diese Maßnahmen verbessern sicherlich die Qualität der
Entladung, sind jedoch relativ aufwendig und beanspruchen teilweise auch zusätzlich Raum.

Der Erfindung liegt daher die Aufgabe zugrunde, für einen
Laser der eingangs genannten Art eine Anregungstechnik
zu finden, die auch ohne besondere Vorkehrungen eine räumlich gleichmäßige Besetzungsinversion ermöglicht und dabei kein zusätzliches Bauvolumen verlangt. Diese Aufgabe
wird erfindungsgemäß durch ein Verfahren mit den Merkmalen des Patentanspruchs 1 gelöst.

Bei der vorgeschlagenen Methode wird die Lasertätigkeit
nicht, wie bisher, durch eine freie Entladung zwischen
Metallelektroden, sondern durch eine Oberflächenentladung längs der dielektrischen Platte bewirkt.

Die Oberflächenentladung, in der Literatur häufig auch
als "Creeping Discharge" oder "Gleitentladung" bezeichnet, ist ein an sich wohlbekanntes Phänomen. Sie wird
auch schon seit längerem auf dem Gaslasergebiet verwendet,
allerdings ausschließlich als UV-Lichtquelle zur Einleitung einer freien Entladung (Appl.Phys.Lett.25 (1974)654,
J.Phys.E: Sci.Instrum.13 (1980)632). Auf den Gedanken,
diesen Entladungstyp stattdessen selbst als Pumpquelle
zu nutzen, ist man, soweit ersichtlich, bisher noch nicht
gekommen.

Die physikalischen Vorgänge, unter denen die Oberflächenentladung ausgelöst, weitergeleitet und aufrechterhalten
wird, sind im einzelnen noch nicht geklärt. Tatsache ist
aber, daß die Entladung in einer relativ dünnen, normalerweise unter 100µm dicken Schicht stattfindet, daß die dielektrische Oberfläche an der Entladung beteiligt ist und daß die Entladungsmechanismen von der Polarität der Spannung abhängen. Fungiert die eine Entladungselektrode gegenüber den beiden anderen Elektroden als Kathode, so dürfte das Plasma als eine rein dielektrische Entladung im Kathodenbereich beginnen und dann durch Erzeugung von Sekundärelektronen in der Plattenoberfläche weiterwandern, bis die Gegenelektrode einbezogen ist.

Bei umgekehrtem Spannungsvorzeichen läßt sich die Natur der Entladung nicht ohne weiteres deuten; es ist noch nicht einmal sicher, ob das Plasma überhaupt an einer der beiden Entladungselektroden einsetzt. Feststeht jedoch, daß hier eine homogene Oberflächenentladung außerordentlich begünstigt wird. Versuche haben gezeigt, daß das Plasma über die längste Zeit seines Bestehens und im größten Teil seines Volumens homogen ist, wenn namentlich der Entladungsspannungsimpuls rasch - etwa um 5kV/nsec - ansteigt und nach kurzer Zeit, beispielsweise 10nsec, wieder abklingt. Die Entladungsgeometrie (Plattendicke, Elektrodenabstand, Elektrodenprofil) ist dabei relativ unkritisch. Auch der Gasdruck und die Ladespannung lassen sich in relativ weiten Grenzen variieren. Welche Werte man diesen Parametern im Einzelfall gibt, hängt nicht zuletzt auch von der Art des laseraktiven Gases ab. Für Stickstoff werden weiter unten Zahlenbeispiele und mögliche Wertebereiche genannt.

Ein Spannungsanstieg von 5kV/nsec verlangt einen Entladungskreis mit einer Eigeninduktivität in der Größenordnung von 1nH und einen Schalter, der hohe Leistungen in einer Schaltzeit um 1nsec bewältigt. Diese Anforderungen lassen sich relativ einfach erfüllen, beispielsweise mit einem Hochspannungsgenerator auf Bandleiterbasis ("Blümlein-Generator") und einer (mechanisch getriggerten) Ölfunkenstrecke.

Im Ergebnis erhält man eine billige, kompakte Kurzzeitlichtquelle, die intensive Lichtpulse mit guter Richtcharakteristik abgibt. Sie läßt sich beispielsweise in
der Kurzzeitphotographie, bei Entfernungsmessungen, als
Pumpquelle für Farbstofflaser, für spektroskopische Untersuchungen, zum Triggern von Halbleiterschaltern oder
als Landehilfe für Flugzeuge einsetzen.

Weitere vorteilhafte Ausgestaltungen und Weiterbildungen
der Erfindung sind Gegenstand zusätzlicher Ansprüche.

DerLösungsvorschlag soll nun anhand eines bevorzugten
Ausführungsbeispiels in Verbindung mit der beigefügten
Zeichnung näher erläutert werden. Es zeigen:

Fig. 1 einen erfindungsgemäßen $N_2$-Laser, in einem sche-
       matisch gehaltenen Seitenschnitt;
Fig. 2 den vom Hochspannungsgenerator gelieferten Strom J
       als Funktion der Zeit t;
Fig. 3 den zeitlichen Verlauf des Laserpulses, bei vorgegebenen Druck- und Ladespannungswerten p bzw. U;
Fig. 4 die Laserleistung L als Funktion der Ladespannung
       und der Polarität sowie
Fig. 5 die Laserleistung, aufgetragen gegen den Druck
       und die Polarität, bei einer bestimmten Ladespannung.

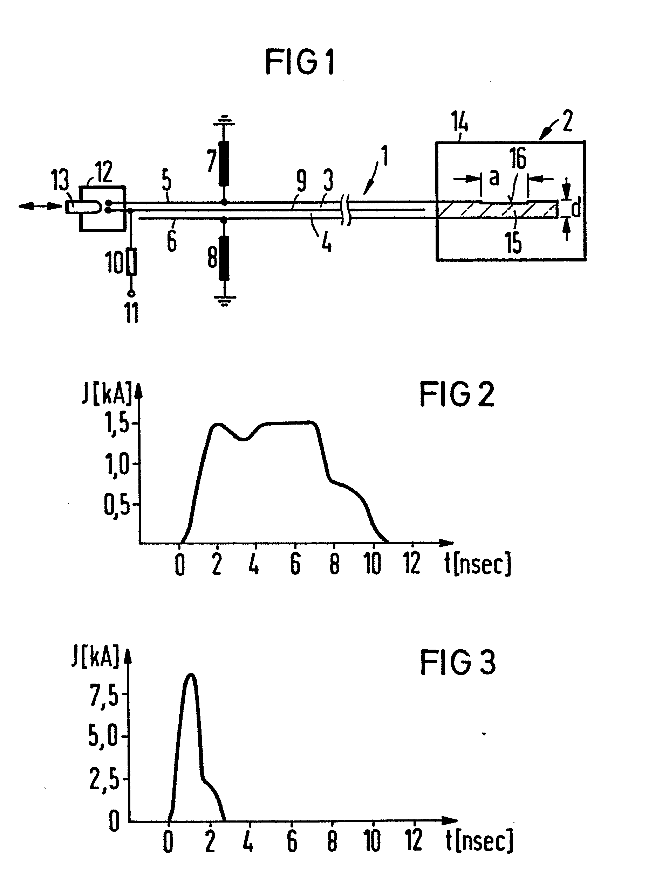

Der Laser der Fig. 1 enthält einen Hochspannungsgenerator 1
sowie einen Laserkopf 2. Der Generator 1 ist ein gefalteter Blümleingenerator. Er besteht aus zwei je 40cm langen,
5cm breiten und 0,15cm dicken Epoxidharzfolien 3, 4, die
beidseitig jeweils mit einer Kupferfolie kaschiert und
flach aufeinandergelegt sind. Die äußeren Kupferfolien 5, 6
dieser Doppelbandleitung sind über Induktivitäten 7, 8
mit Masse verbunden, während die innere Kupferfolie 9 über
einen Widerstand 10 an einer 10kV-Spannungsquelle 11 liegt.
An dem einen Bandleiterende befindet sich ein Schalter,
der die Folien 5 und 9 miteinander verbindet und im vorliegenden Beispiel durch eine mechanisch getriggerte Öl-

- 5 - VPA

funkenstrecke realisiert ist. In der Figur wird dieser Schalter durch ein Gehäuse 12 mit einer verschiebbaren Kontaktbrücke 13 symbolisiert.

Der gesamte Entladungskreis hat eine Kapazität von etwa 1,8nF und eine Grenzfrequenz >200MHz. Die Doppelbandleitung hat einen Wellenwiderstand von 4,3$\Omega$, und die Ölfunkenstrecke verfügt über eine Schaltzeit von etwa 1,5nsec.

An seinem vom Schalter abgewandten Ende geht der Bandleiter in den Laserkopf über. Diese Einheit enthält eine mit 200mbar Stickstoff gefüllte Kammer 14 und eine etwa 1mm dicke Glasplatte 15. Der Figur entnimmt man, daß die Glasplatte die Epoxidharzfolien fortsetzt und auf der Plattenoberseite einen Entladungskanal 16 definiert ist. Dieser Kanal wird dadurch gebildet, daß die Außenfolie 6 um die schalterabgewandte Schmalseite der Platte 15 herumgeführt ist und zur Außenfolie 5 einen Abstand von ca.1cm hält. Der gesamte Laserkopf hat eine Induktivität von 0,5nH.

Der Laser wird folgendermaßen betrieben:
Schließt man den Schalter, so breitet sich zwischen den Folien 5 und 9 ein Stromimpuls aus. Dieser Impuls hat wegen der guten Impedanzanpassung einen nahezu rechteckförmigen Verlauf. Fig. 2 zeigt, daß der Strom mit 0,75kA/nsec auf etwa 1,5kA ansteigt und ca. 10nsec dauert. Wenn der Strom den Entladungskanal erreicht, löst er dort eine Oberflächenentladung aus, die sich innerhalb kürzester Zeit homogenisiert und etwa 15nsec anhält. Mit einer Verzögerung von etwa 7nsec entsteht - ohne Verwendung eines optischen Resonators - ein Laserimpuls mit einer Halbwertsbreite von 1,5nsec (FWHM) und einer maximalen Leistung von 15kW (Fig.3). Die Pulsenergie beträgt etwa 22,5$\mu$J, und die spezifische Leistung hat einen Wert von ungefähr 420kW/cm$^3$. Die laseraktive Schichtdicke, die man aus dem Strahlquerschnitt unter Berücksichtigung der beugungsbedingten Strahldivergenz abschätzen kann, liegt bei ca. 70$\mu$m.

Die geschilderte Laserausführung ist noch nicht optimiert. Man kann auch mit anderen Konfigurationen ähnliche oder gar bessere Kenndaten erzielen. Einzelne Einflußgrößen lassen sich dabei innerhalb großer Bandbreiten verändern, wie aus folgenden Daten hervorgeht.

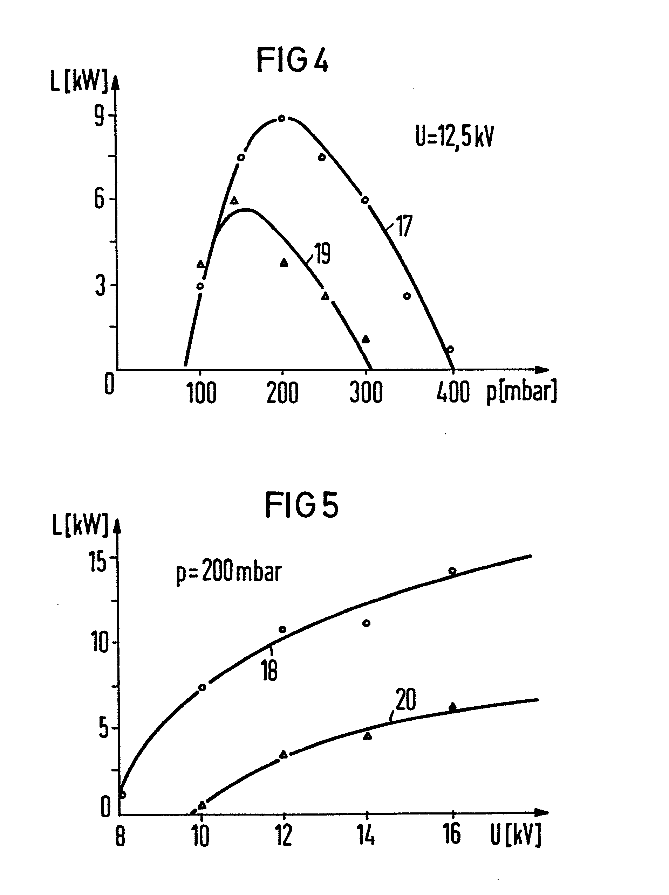

So könnte man die Dicke d der dielektrischen Platte ohne weiteres zwischen 0,3mm und 3mm variieren. Wesentliches Kriterium für die Dickenbemessung ist lediglich, daß einerseits eine genügend intensive Oberflächenentladung zustandekommt und andererseits der Hochspannungsgenerator elektrisch angepaßt bleibt. Der Elektrodenabstand a könnte einen Wert zwischen 2mm und 20mm haben. Dieser große Wertebereich ist möglich, weil es im Grunde nur darauf ankommt, eine freie Entladung zu verhindern und einen günstigen E/p-Wert (E=Feldstärke im Spalt, p = Gasdruck) zu ermöglichen. Auch der Gasdruck und die Ladespannung sind, wie die Figuren 4 und 5 zeigen, relativ unkritische Größen. Aus der Fig. 4, in der die Laserleistung L gegen p bei einer Ladespannung U von 12,5kV aufgetragen ist, geht hervor, daß es bei Drücken zwischen 100mbar und 400mbar zu einer Laseraktivität kommt (Kurve 17). Und der Fig. 5 entnimmt man, daß die Laserleistung bei einem Druck von 200mbar mit 8kV einsetzt, mit zunehmenden U-Werten ansteigt und zumindest bei 16kV noch keine Sättigung zeigt (Kurve 18).

In die Figuren 4 und 5 sind zum Vergleich auch noch die L-Werte eingezeichnet, die man bei umgekehrter ( "negativer") Spannungspolarität erhält (Kurven 19 bzw. 20). Die Vergleichskurven zeigen eine deutlich schlechtere Leistungscharakteristik: Bei einer Ladespannung von 12,5kV wird das Leistungsmaximum nahezu halbiert, und bei einem Gasdruck von 200mbar setzt die Laseraktivität erst mit einer Ladespannung von 10kV ein und erbringt zumindest bis 16kV noch nicht einmal die halbe Leistung. Diese Unterschiede sind darauf zurückzuführen, daß die Oberflächenentladung bei positiver Polarität in Form einer homogenen Glimmentladung vonstattengeht und bei negativer Polarität zu einem Bündel von fadenartigen Bogenentladungen entartet.

Die Erfindung ist nicht auf das dargestellte Ausführungsbeispiel und die angegebenen Modifikationsmöglichkeiten beschränkt. So kommen neben Stickstoff auch andere (im Ultravioletten emittierende) Lasergase in Frage, etwa Luft, Wasserstoff oder Excimere; einige dieser Gase benötigen dann einen optischen Resonator. Davon abgesehen könnte man den Hochspannungsgenerator auch auf andere Weise, etwa mit Koaxialleitern, realisieren. Wichtig ist dabei allerdings, daß der Wellenwiderstand klein bleibt, damit man dem Gas mit einer Spannung unterhalb der Durchschlagsspannung eine ausreichende Energiemenge zuführen kann. Im übrigen könnte die Ölfunkenstrecke auch durch andere schnelle Hochleistungsschalter, beispielsweise Thyratrons, ersetzt werden.

14 Patentansprüche

5 Figuren

Patentansprüche

1. Verfahren zum Betrieb eines Gaslasers,
der folgendermaßen aufgebaut ist:
1a) eine Platte aus dielektrischem Material trägt auf
ihrer einen Seite zwei Elektroden (Entladungsanode,
Entladungskathode), zwischen denen sich ein Spalt
(Entladungskanal) erstreckt,
b) auf der anderen Plattenseite ist eine dritte, flächige Elektrode (Rückelektrode) angeordnet, die zumindest die Grundfläche des Entladungskanals überdeckt,
c) im Entladungskanal befindet sich ein laseraktives
Gas,
d) mit den Entladungselektroden ist ein schaltbarer
Hochspannungsgenerator verbunden;
und dessen laseraktives Gas folgendermaßen angeregt wird:
2a) durch Schalten des Hochspannungsgenerators erzeugt
man zwischen den beiden Entladungselektroden einen
Hochspannungsimpuls, der
b) im Entladungskanal eine Gasentladung auslöst;
d a d u r c h   g e k e n n z e i c h n e t,   daß
2c) die Gasentladung eine Oberflächenentladung längs der
dielektrischen Platte (15) ist.

2. Verfahren nach Anspruch 1, d a d u r c h   g e k e n n -
z e i c h n e t,   daß man die eine Entladungselektrode
galvanisch mit der Rückelektrode verbindet.

3. Verfahren nach Anspruch 2, d a d u r c h   g e k e n n -
z e i c h n e t,   daß man die mit der Rückelektrode galvanisch verbundene Entladungselektrode als Entladungskathode verwendet.

4. Verfahren nach einem der Ansprüche 1 bis 3, d a d u r c h
g e k e n n z e i c h n e t,   daß man den Hochspannungsimpuls mit einem Wert > 1,5kV/nsec, insbesondere > 2kV/nsec,
ansteigen läßt.

5. Verfahren nach einem der Ansprüche 1 bis 4, **d a d u r c h
g e k e n n z e i c h n e t**, daß man den Hochspannungsimpuls auf einen Wert zwischen 8kV und 20kV, insbesondere
zwischen 9kV und 14kV, ansteigen läßt.

6. Laser zur Durchführung eines Betriebsverfahrens gemäß
einem der Ansprüche 1 bis 5, **d a d u r c h   g e k e n n -
z e i c h n e t**, daß die dielektrische Platte (15) einen
Sekundärelektronenemissionskoeffizienten $\gamma > 2$, insbesondere $\gamma > 3$, hat.

7. Laser nach Anspruch 6, **d a d u r c h   g e k e n n -
z e i c h n e t**, daß die dielektrische Platte (15) aus
Glas besteht.

8. Laser zur Durchführung eines Betriebsverfahrens gemäß
einem der Ansprüche 1 bis 5, **d a d u r c h   g e k e n n z e i c h -
n e t**, daß gilt: $0,3mm \leq d \leq 3mm$ und $2mm \leq a \leq 20mm$, insbesondere $0,6mm \leq d \leq 1,4mm$ und $5mm \leq a \leq 15mm$ (d = Dicke der
dielektrischen Platte, a = Abstand zwischen den Entladungselektroden).

9. Laser zur Durchführung eines Betriebsverfahrens gemäß
einem der Ansprüche 1 bis 5, **d a d u r c h   g e k e n n z e i ch-
n e t**, daß die Elektroden als Beläge (5, 6) ausgebildet
sind.

10. Laser zur Durchführung eines Betriebsverfahrens gemäß
einem der Ansprüche 1 bis 5, **d a d u r c h   g e k e n n z e i ch-
n e t**, daß das laseraktive Gas Stickstoff ist.

11. Laser nach Anspruch 10, **d a d u r c h   g e k e n n z e i ch-
n e t**, daß gilt: $100mbar \leq p \leq 400mbar$, insbesondere
$150mbar \leq p \leq 250mbar$ (p = Druck des laseraktiven Gases).

12. Laser zur Durchführung eines Betriebsverfahrens gemäß
einem der Ansprüche 1 bis 5, dadurch **g e k e n n** zeichnet,

daß der Hochspannungsgenerator (1) eine Eigenimpedanz < 10Ω hat.

13. Laser nach Anspruch 12, d a d u r c h  g e k e n n z e i c h n e t,  daß der Hochspannungsgenerator (1) aus dielektrischen, beidseitig mit Metall belegten Streifen ("Bandleitern") aufgebaut ist.

14. Laser nach Anspruch 12 oder 13, d a d u r c h  g e k e n n z e i c h n e t,  daß der Hochspannungsgenerator (1) zwei flach übereinander liegende Bandleiter enthält, wobei
- die dielektrische Platte (15) die beiden dielektrischen Streifen (3, 4) fortsetzt,
- die beiden metallischen Außenbeläge (5, 6) auf die dielektrische Platte (15) geführt sind,
- der eine der beiden Metallbeläge die vom Hochspannungsgenerator (1) abgewandte Schmalseite der dielektrischen Platte (15) umgreift und zu dem anderen der beiden Metallbeläge einen spaltbildenden Abstand einhält,
- beide äußeren Metallbeläge (5, 6) über Induktivitäten (7, 8) auf Masse geführt sind und der mittlere Metallbelag (9) an einer Hochspannungsquelle (11) liegt und
- der Schalter des Hochspannungsgenerators zwischen dem mittleren Metallbelag (9) und einem der äußeren Metallbeläge (5) eingefügt ist.

FIG 1

FIG 2

FIG 3

0169391

FIG 4

U=12,5kV

FIG 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | SOVIET JOURNAL OF QUANTUM ELECTRONICS, Band 11, Nr. 1, Januar 1981, Seiten 42-45, American Institute of Physics, New York, US; V. YU BARANOV et al.: "Use of a discharge over a dielectric surface for preionization in excimer lasers" * Zusammenfassung; Seiten 42-43, Abschnitt 2, Abbildung 1 * | 1,4-6 | H 01 S 3/097 H 01 S 3/03 |
| | --- | | |
| Y | IEEE JOURNAL OF QUANTUM ELECTRONICS, Band QE-12, Nr. 3, März 1976, Seiten 183-188, New York, US; A.J. SCHWAB et al.: "Compact high-power N2 laser: circuit theory and design" * Seite 183, Abschnitt I; Abbildung 1; Seite 184, Abbildungen 3-4 * | 1,4-6 | |
| | --- | | RECHERCHIERTE SACHGEBIETE (Int. Cl 4) |
| A | idem * Zusammenfassung; Seite 184, Zeilen 24-27 * | 10-12 | H 01 S 3/097 H 01 S 3/03 |
| | --- | | |
| A | US-A-3 879 681 (GODARD et al.) * Zusammenfassung; Abbildungen 1-2,9,11; Patentansprüche 1,5-6 * | 1-3 | |
| | --- | | |
| A | DE-A-2 430 241 (COMPAGNIE GENERALE D'ELECTRICITE) * Abbildungen 1,3-6; Patentanspruch 1 * | 1 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 02-10-1985 | FARNESE G.P. |